**Europäisches Patentamt**

(19) **European Patent Office**

**Office européen des brevets**

(11) **EP 0 595 120 B1**

(12) **EUROPÄISCHE PATENTSCHRIFT**

(45) Veröffentlichungstag und Bekanntmachung des Hinweises auf die Patenterteilung:
**11.04.2001 Patentblatt 2001/15**

(51) Int Cl.[7]: **C08F 287/00**, C08F 279/02

(21) Anmeldenummer: **93116603.7**

(22) Anmeldetag: **14.10.1993**

(54) **Thermoplastische Formmasse**

Thermoplastic moulding mass

Masse à mouler thermoplastique

(84) Benannte Vertragsstaaten:
**BE DE ES FR GB IT NL**

(30) Priorität: **24.10.1992 DE 4235978**

(43) Veröffentlichungstag der Anmeldung:
**04.05.1994 Patentblatt 1994/18**

(73) Patentinhaber: **BASF Aktiengesellschaft**
**67063 Ludwigshafen (DE)**

(72) Erfinder:
• **Knoll, Konrad, Dr.**
**D-68161 Mannheim (DE)**
• **Gausepohl, Hermann, Dr.**
**D-67112 Mutterstadt (DE)**

(56) Entgegenhaltungen:
**US-A- 4 153 647**

• **D.R. PAUL AND LL.H. SPERLING 'Multicomponent Polymer Materials' 26. August 1984 , AMERICAN CHEMICAL SOCIETY , WASHINGTON, US J.M. Widmaier et al. "Extraction Studies and Morphology of physical-Chemical Interpenetrating Polymer Networks based on Block Polymer and Polystyrene" p.195-209**

**Beschreibung**

Die Erfindung betrifft eine thermoplastische Formmasse auf der Grundlage eines Polymeren einer aromatischen Vinylverbindung, insbesondere des Styrols und einem darin dispergierten Kautschukpolymerisat sowie ein Verfahren zu deren Herstellung. Die erfindungsgemäße thermoplastische Formmasse kann als schlagfestes Polystyrol mit einem geringen Restmonomerengehalt angesehen werden.

Zum Stande der Technik sind die nachstehenden Druckschriften heranzuziehen:

   (1) GB 1 269 936
   (2) US 3 694 535
   (3) GB 1 194 440
   (4) GB 1 119 261
   (5) US 3 536 787
   (6) GB 1 213 467
   (7) FR 2 050 116

Die Bemühungen, den Gehalt an Restmonomeren in Polymerisaten des Styrols zu senken, sind nicht neu. Alle bekannten Verfahren versuchen jedoch, dies durch Erhitzen der Polymerschmelze auf Extrudern oder in speziellen Entgasern zu erreichen (vgl. z.B. GB 1 213 467, GB 1 194 440 oder GB 1 119 261). Teilweise werden auch Hilfsmittel wie Stickstoff und Wasserdampf verwandt, um die innere Oberfläche der Schmelze zu vergrößern und dadurch den Entgasungseffekt zu erhöhen (GB 1 269 936, US 3 536 787).

Der Nachteil all dieser Verfahren besteht darin, daß sie hohe Temperaturen brauchen, unter denen sich bereits ein Depolymerisations-Polymerisations-Gleichgewicht einstellt. Die Folge ist, daß stetig Monomere (Styrol) oder Oligomere gebildet werden.

Die US-A 4 153 647 beschreibt die Herstellung von schlagzähem Polystyrol durch anionische Polymerisation von Styrol in Gegenwart von Kautschuken. Das erhaltenen Polymerisationsprodukt wird mit Peroxidverbindungen oder Redoxystemen vernetzt und soll verbesserte mechanische Eigenschaften aufweisen.

Aufgabe der Erfindung ist es, ein Verfahren anzugeben, das schlagzähes Polystyrol im wesentlichen ohne Restmonomere herzustellen erlaubt.

Die Aufgabe wurde mit einem an sich bekannten Verfahren zur Herstellung von Polystyrol durch anionische Polymerisation dadurch gelöst, daß man in einer ersten Verfahrensstufe in an sich bekannter Weise ein kautschukelastisches Blockcopolymerisat durch sequentielle anionische Polymerisation einer aromatischen Vinylverbindung und einer (Alka-)dienverbindung in einem inerten Lösungsmittel erzeugt, die schließlich verbleibenden lebenden Kettenenden entweder unverändert läßt oder mit einer stöchiometrischen Menge einer protonenaktiven Substanz verschließt, in mindestens einer weiteren Verfahrensstufe eine vinylaromatische Verbindung in Gegenwart des Blockcopolymeren unter erneutem Zusatz eines anionischen Initiators und Rühren polymerisiert und die lebenden Kettenenden schließlich (wiederum) durch Zusatz einer protonenaktiven Substanz verschließt.

Bevorzugt wird ein Verfahren zur Herstellung einer thermoplastischen Formmasse aus 80 - 50 Gew.-% einer Hartmatrix aus einer anionisch polymerisierten vinylaromatischen Verbindung und 20 - 50 Gew.-% einer gleichmäßig in der Hartmatrix verteilten Weichphase, jeweils bezogen auf die Summe aus Hartmatrix und Weichphase, wobei man in einer ersten Stufe ein kautschukelastisches Blockcopolymerisat auf Basis einer vinylaromatischen Verbindung und eines Alkadiens im Gewichtsverhältnis von 5:95 bis 55:45 anionisch bis zum vollständigen Umsatz polymerisiert, ggf. die lebenden Kettenenden verschließt und unter erneutem Zusatz eines anionischen Initiators und unter Rühren die vinylaromatische Verbindung in Gegenwart des Bockcopolymerisats polymerisiert und die lebenden Kettenenden schließlich wiederum verschließt.

Nach dem Verfahren sind Formmassen erhältlich, bei denen der Anteil an Dimeren bis einschließlich Dekameren kleiner als 1 % ist.

Als vinylaromatische Verbindung können Vinyltoluol, tert-Butylstyrol, $\alpha$-Methylstyrol allein oder im Gemisch mit Styrol bzw. im Gemisch untereinander.

Als Alkadien können Isopren, Dimethylbutadien allein oder im Gemisch mit Butadien bzw. im Gemisch untereinander.

Bevorzugt wird als vinylaromatische Verbindung Styrol und als Alkadien Butadien verwendet.

Durch Abbruch der lebenden Kettenenden in der ersten Verfahrensstufe entsteht ein Blockcopolymerisat, welches nicht weiterreagiert.

Bei geeigneter Wahl des Verhältnisses von Alkadien und vinylaromatischer Verbindung kann aber auch auf den Zwischenschritt des Abbruchs verzichtet werden. Obwohl das Blockcopolymerisat der ersten Verfahrensstufe in der zweiten Stufe weiter reagiert, entstehen bei der Phaseninversion diskrete, dispers verteilte Weichkomponententeilchen in der Hartmatrix.

Geeignete Blockcopolymerisate

Ein geeignetes kautschukelastisches Blockcopolymerisat kann vom Typ S-B, S-B-S, B-S-B oder S-B-S-B sein, wobei B (Alka-)dien und S die vinylaromatische Verbindung bedeutet. Als (Alka-)dien kommen Isopren, Dimethylbutadien sowie insbesondere Butadien oder deren Mischungen in Betracht.

Das Molekulargewicht des Dienblocks sollte 15 000 - 350 000, vorzugsweise 25 000 - 250 000 betragen. Die Konfiguration des Blocks B entspricht üblicherweise der eines sogenannten Mediumcis-Kautschuks mit einem Vinylanteil von 9 - 12 %. Durch entsprechende Führung der Polymerisation sind aber auch Polymere mit höherem 1,2-Vinylgehalt möglich.

Unter vinylaromatischen Verbindungen sind anionisch polymerisierbare Substanzen vom Typ des Styrols selbst und seiner Substitutionsprodukte zu verstehen wie beispielsweise α-Methylstyrol, Vinyltoluol, tert-Butylstyrol oder Ethylstyrol.

Diese Verbindungen können für sich allein oder in Mischung untereinander den vinylaromatischen Block B bilden, wobei Block-Molekulargewichte von 15 000 - 200 000, vorzugsweise 20 000 - 150 000 erwünscht sind.

Die Übergänge zwischen den Blöcken können scharf sein oder als sogenannte verschmierte Übergänge vorliegen.

Das Blockcopolymerisat kann sternförmig aufgebaut sein.

Polymerisation

Die erfindungsgemäße Formmasse wird in zwei Verfahrensschritten erhalten,- nämlich der Herstellung des Blockkautschuks und der Herstellung der polyvinylaromatischen Hartmatrix in Gegenwart des Blockkautschuks und unter Anwendung eines geeigneten Scherfeldes.

a) Herstellung des Blockkautschuks

Die Herstellung des Blockkautschuks erfolgt auf bekannte Weise in einem inerten Lösungsmittel. Eine geeignete Beschreibung, auf die verwiesen werden kann, findet sich beispielsweise in der DE 1 301 496.

Wesentlich für die Erfindung ist, daß das Gewichtsverhältnis von Butadien und vinylaromatischer Verbindung so eingestellt wird, daß für die zweite Verfahrensstufe ein Blockkautschuk bereitgestellt wird, der nicht nur die disperse Verteilung der Weichphase in der Hartmatrix gewährleistet, sondern auch die gewünschte Teilchenart entstehen läßt. Welche Verhältnisse von Butadien zu Styrol im Blockcopolymeren zur gewünschten Teilchenstruktur führen, ist bekannt (Echte; Angew. Makromol. Chem. 58/59, 175 (1977).

Das Blockcopolymere, das noch lebende Kettenenden aufweist, kann entweder in dieser Form, also als sog. lionig polymer verwendet werden oder es wird mit einer stöchiometrischen Menge einer protonenaktiven Substanz behandelt. Vorzugsweise werden Wasser oder ein Alkohol verwendet.

Der Feststoffgehalt der ersten Stufe sollte 50 % nicht überschreiten. Bevorzugt werden Feststoffgehalte von 15-35 %.

b) Herstellung der Hartmatrix

Um erfindungsgemäß eine thermoplastische Formmasse zu erhalten, versetzt man die Polymerlösung mit einem metallorganischen Initiator und läßt unter Rühren die gewünschte vinylaromatische Verbindung zulaufen.

Als Initiator dienen die bekannten Monolithium-Kohlenwasserstoffe der allgemeinen Formel R-Li, wobei R einen aliphatischen, cycloaliphatischen, aromatischen oder gemischt aliphatisch-aromatischen Kohlenwasserstoffrest darstellt. Vorzugsweise werden Monolithium-Alkylverbindungen mit 2 bis 6 Kohlenwasserstoffatomen in der Alkylgruppe eingesetzt, wovon n-Butyl- oder sec-Butyllithium besonders bevorzugt sind.

Die vinylaromatische Verbindung läßt man in einer solchen Geschwindigkeit zulaufen, daß man die Polymerisationswärme über Siedekühlung oder Außenkühlung gut abführen und eine Temperatur von 40 - 150°C, vorzugsweise 60 - 80°C einhalten kann.

Je nachdem, ob man mit einem "lebenden" oder einem abgeschlossenen Blockkautschuk arbeitet, wird sich dessen Struktur durch Entstehen eines weiteren polyvinylaromatischen Blocks verändern oder dies wird nicht eintreten. In jedem Falle sollte aber daneben eine Pfropfreaktion stattfinden. Die Erfindung wird von dieser Erscheinung jedoch nicht abhängig gemacht.

Im Verlauf des Umsatzes der vinylaromatischen Verbindung tritt - wie bei der bekannten Radikalpolymerisation - in jedem Falle eine Phaseninversion ein, wobei sich die zunächst kohärente Blockkautschuk-Phase dispers in der Hartmatrix-Phase verteilt.

Was sich bei dieser Phaseninversion abspielt, ist bekannt und beispielsweise von Echte et al., Angew. Chem. 93, 372-388 (1981) beschrieben.

In diesem Zustand muß das polymerisierende Gemisch so gerührt werden, daß sich Kautschukteilchen bestimmter Struktur und Größe bilden, wie bei Echte et al., loc. cit. nachzulesen ist.

Nach der Phaseninversion muß weitergerührt werden, also durch geeignete Scherbedingungen die jeweils angestrebte mittlere Teilchengröße erreicht bzw. stabilisiert werden. Die Scherbedingungen sind abhängig u.a. von der Reaktorgröße, dem Füllgrad, der Lösungsviskosität und der Art des Rührorganes. Die Scherbedingungen können vom Fachmann anhand weniger Versuche festgelegt werden. Hierzu finden sich Hinweise bei Freeguard, J. Appl. Polym. Sci 15, 1649 (1971).

Das Molekulargewicht der die Hartmatrix bildenden vinylaromatischen Verbindung kann wie bei jeder anionischen Polymerisation durch das Verhältnis von Initiator zum Monomeren im voraus festgelegt werden. Es liegt vorzugsweise zwischen 150 000 und 350 000.

Entfernung des Lösungsmittels

Im Anschluß an die Polymerisation wird in üblicher Weise aufgearbeitet. Dies kann z.B. durch Behandeln auf einem Entgasungsextruder geschehen, wo das Lösungsmittel z.B. bei 120 bis 260°C sowie vermindertem Druck zwischen 2 und 80 mbar entfernt wird.

Erfindungsgemäße thermoplastische Formmassen können die üblichen Hilfsmittel wie Stabilisatoren, Gleitmittel, Antistatika oder UV-Schutzmittel enthalten.

Beispiel 1

Schritt 1:

Ein 10-l-Metallkessel mit Ankerrührer wurde unter Stickstoff mit einer Lösung von n-Butyllithium-1,1-Diphenylethylen (10:1) in Cyclohexan ausgekocht und mit 2304 ml Ethylbenzol befüllt. Nach Zugabe von 63,7 ml unstabilisiertem Styrol wurde bei 30°C 0,11 molares sec-Butyllithium bis zur beginnenden Gelbfärbung zugesetzt. Bei 37°C wurden 8 ml 0,11 m sec-BuLi zugegeben und 30 min bei max. 65°C polymerisiert ($\overline{M}_n$ = 57 000) und anschließend bei gleicher Temperatur 250 ml Butadien innerhalb 50 min polymerisiert. Die gelbe Lösung wurde bis zur Entfärbung mit 1 m Isopropanollösung in Cyclohexan titriert (0,9 ml). Molmasse des Blockcopolymeren gegen Polystyrol-Standard (GPC): 350 000.

Schritt 2:

Es wurden 107,9 ml 0,11 m sec-BuLi zugegeben und 1958 ml Styrol bei 60 - 65°C innerhalb 25 min zugegeben, 30 min nachpolymerisiert und mit 2 ml Isopropanol abgebrochen. (GPC: Peakmaximum bei 150 000). Die Lösung wurde mit 2 g Irganox 1076 stabilisiert und mit 40 g Weißöl versetzt.

Die milchig-weiße Lösung wurde im Extruder bei 200°C und 20 mbar entgast und konfektioniert. Der Restgehalt an Styrol wurde gaschromatographisch bestimmt und ergab 4 ppm.

Beispiel 2

Es wurde wie in Beispiel 1 verfahren, wobei zuerst Butadien und dann Styrol polymerisiert wurde. Das Produkt war mit dem in Versuch 1 identisch. Der Restmonomergehalt betrug 5 ppm.

Beispiel 3

Es wurde wie in Beispiel 2 verfahren, aber nach Schritt 1 kein Isopropanol zugesetzt. GPC ergab je ein Peakmaximum von 500 000 (13 % bezüglich UV-Detektion) bzw. 15 000 (87 % bezüglich UV). Als Reststyrolgehalt ergaben sich 4 ppm.

**Patentansprüche**

1. Verfahren zur Herstellung einer thermoplastischen Formmasse aus 80 - 50 Gew.-% einer Hartmatrix aus einer anionisch polymerisierten vinylaromatischen Verbindung und 20 - 50 Gew.-% einer gleichmäßig in der Hartmatrix verteilten Weichphase, jeweils bezogen auf die Summe aus Hartmatrix und Weichphase, wobei man in einer ersten Stufe ein kautschukelastisches Blockcopolymerisat auf Basis einer vinylaromatischen Verbindung und eines Alkadiens im Gewichtsverhältnis von 5:95 bis 55:45 anionisch bis zum vollständigen Umsatz polymerisiert, ggf. die lebenden Kettenenden verschließt und unter erneutem Zusatz eines anionischen Initiators und unter Rühren die vinylaromatische Verbindung in Gegenwart des Bockcopolymerisats polymerisiert, dadurch gekennzeichnet, daß man die lebenden Kettenenden schließlich mit Wasser oder einem Alkohol verschließt.

2. Thermoplastische Formmasse erhältlich nach dem Verfahren nach Anspruch 1, dadurch gekennzeichnet, daß der Anteil an Dimeren bis einschließlich Dekameren kleiner als 1 % ist.

3. Thermoplastische Formmasse nach Anspruch 2, enthaltend als vinylaromatische Verbindung Styrol und als Alkadien Butadien.

4. Thermoplastische Formmasse nach Anspruch 2, enthaltend als vinylaromatische Verbindung Vinyltoluol, tert-Butylstyrol, α-Methylstyrol allein oder im Gemisch mit Styrol bzw. im Gemisch untereinander.

5. Thermoplastische Formmasse nach Anspruch 2, enthaltend als Alkadien Isopren, Dimethylbutadien allein oder im Gemisch mit Butadien bzw. im Gemisch untereinander.

6. Thermoplastische Formmasse nach Anspruch 2, enthaltend ein Blockcopolymerisat, welches vom Typ S-B, S-B-S, B-S-B, S-B-S-B ist und scharfe oder verschmierte Übergänge zwischen den Blökken aufweist, wobei B das polymere Alkadien und S die polymere vinylaromatische Verbindung bedeutet.

7. Thermoplastische Formmasse nach Anspruch 1, 2, 4 und 5, dadurch gekennzeichnet, daß das Blockcopolymerisat sternförmig aufgebaut ist.

**Claims**

1. A process for preparing a thermoplastic molding composition comprising 80 - 50% by weight of a hard matrix made from an anionically polymerized vinyl aromatic compound and 20 - 50% by weight of a soft phase uniformly distributed in the hard matrix, based in each case on the entirety of hard matrix and soft phase, where, in a first stage, an elastomeric block copolymer based on a vinyl aromatic compound and on an alkadiene in a ratio by weight of from 5:95 to 55:45 is polymerized anionically to complete conversion, where appropriate the living chain ends are deactivated, and, with fresh addition of an anionic initiator and with stirring, the vinyl aromatic compound is polymerized in the presence of the block copolymer, which comprises using water or an alcohol to deactivate the living chain ends.

2. A thermoplastic molding composition obtainable by the process as claimed in claim 1, wherein the proportion of material within the range dimers to decamers inclusive is below 1%.

3. A thermoplastic molding composition as claimed in claim 2, comprising styrene as vinyl aromatic compound and butadiene as alkadiene.

4. A thermoplastic molding composition as claimed in claim 2, comprising, as vinyl aromatic compound, vinyltoluene, tert-butyl or styrene, α-methylstyrene, alone or mixed with styrene, or mixed with one another.

5. A thermoplastic molding composition as claimed in claim 2, comprising, as alkadiene, isoprene or dimethylbutadiene, alone or mixed with butadiene, or mixed with one another.

6. A thermoplastic molding composition as claimed in claim 2, comprising a block copolymer of S-B, S-B-S, B-S-B, or S-B-S-B type, having sharp or tapered transitions between the blocks, where B is the polymeric alkadiene and S is the polymeric vinyl aromatic compound.

7. A thermoplastic molding composition as claimed in any of claims 1, 2, 4 and 5, wherein the block copolymer has a star-shaped structure.

**Revendications**

1. Procédé pour la préparation d'une matière à mouler thermoplastique constituée par, à concurrence de 80 à 50 % en poids, une matrice dure constituée d'un composé vinylaromatique polymérisé dans des conditions anioniques et par, à concurrence de 20 à 50 % en poids, une phase tendre répartie de manière uniforme dans la matrice dure, les pourcentages en poids étant respectivement rapportés à la somme de la matrice dure et de la phase tendre, dans lequel, dans une première étape, on polymérise un copolymère séquencé dont l'élasticité rappelle celle du caoutchouc, à base d'un composé vinylaromatique et d'un alcanediène, dans le rapport pondéral de 5:95 à 55:45 dans des conditions anioniques jusqu'à la conversion complète; le cas échéant, on bloque les extrémités de chaînes vivantes; et, tout en ajoutant une nouvelle quantité d'un initiateur anionique et tout en agitant, on polymérise le composé vinylaromatique en présence du copolymère séquencé, caractérisé en ce qu'on bloque les extrémités de chaînes vivantes finalement avec de l'eau ou avec un alcool.

2. Matière à mouler thermoplastique que l'on obtient conformément au procédé selon la revendication 1, caractérisée en ce que la fraction des dimères jusqu'aux décamères inclus est inférieure à 1 %.

3. Matière à mouler thermoplastique selon la revendication 2, contenant, à titre de composé vinylaromatique, du styrène et à titre d'alcanediène, du butadiène.

4. Matière à mouler thermoplastique selon la revendication 2, contenant, à titre de composé vinylaromatique, du vinyltoluène, du tert.-butylstyrène, de l'α-méthylstyrène, seuls ou en mélange avec du styrène, respectivement en mélange l'un avec l'autre.

5. Matière à mouler thermoplastique selon la revendication 2, contenant, à titre d'alcanediène, de l'isoprène, du diméthylbutadiène, seuls ou en mélange avec du butadiène, respectivement en mélange l'un avec l'autre.

6. Matière à mouler thermoplastique selon la revendication 2, contenant un copolymère séquencé qui est du type S-B, S-B-S, B-S-B, S-B-S-B et qui présente des transitions nettes ou progressives entre les séquences, B représentant l'alcanediène polymère et S le composé vinylaromatique polymère.

7. Matière à mouler thermoplastique selon les revendications 1, 2, 4 et 5 caractérisée en ce que le copolymère séquencé possède une structure en forme d'étoile.